# EUROPÄISCHE PATENTANMELDUNG

(11) **EP 0 814 592 A1**
(43) Veröffentlichungstag der Anmeldung: **29.12.1997**
(21) Anmeldenummer: 96109818.3
(22) Anmeldetag: 19.06.1996
(51) Int. Cl.: H04M 15/30, H04M 3/48

(54) **Per Funk programmierbares Modul zur Anrufumleitung**

(71) Anmelder: FIRMA ERIKA KÖCHLER, CH-8833 Samstagern (CH)
(72) Erfinder: Köchler, Helmut, 8832 Wollerau (CH)
(74) Vertreter: Blum, Rudolf Emil Ernst

(57) **Zusammenfassung**

Ein Modul (1) ist zwischen einem Telefon-Endgerät (3) und einem internationalen Fernsprech-Netzwerk (10) eingeschlauft und analysiert die vom Endgerät (3) ausgehenden Anrufe. Für Anrufe in Länder oder Gebiete mit tiefen Telefongebühren fordert das Modul einen Rückruf bei einem Vermittlungscomputer (11) an, so dass auch Abonnenten in Hochtarifgebieten von tieferen Telefontarifen profitieren können. Ebenso kann das Modul (1) mittels Steuersignalen an die Zentralen des Fernsprech-Netzwerks (10) Leitungen billiger Anbieter auswählen. In einem Speicher des Moduls (1) ist festgelegt, für welche Empfänger Umleitungen vorzunehmen sind. Um den Inhalt dieses Speichers zu ändern, verfügt das Modul über einen Funkempfänger, der Signale aus einem Paging-Netzwerk empfängt. Somit ist es möglich, den Speicherinhalt einfach und schnell geänderten Tarifstrukturen, neuen Vermittlungscomputern und anderen Änderungen anzupassen.

## Beschreibung

Die Erfindung betrifft eine Vorrichtung zur Anordnung zwischen einem Telefon-Endgerät und einem Fernsprechnetz, ein Fernsprechnetz mit einer solchen Vorrichtung, sowie ein Verfahren zu deren Betrieb gemäss den Oberbegriffen der unabhängigen Patentansprüche.

Um die Gebührenunterschiede beim Telefonverkehr mit mehreren Telefondienst-Anbietern auszunützen, werden z.B. sogenannte "Callback-Dienste" angeboten. Hierbei nimmt z.B. ein Anrufer aus einem Hochtarifland mit einer Servicestelle in einem Niedertarifland Kontakt auf und teilt dieser den gewünschten Gesprächspartner mit. Die Servicestelle ruft sodann den Anrufer und gleichzeitig den Gesprächspartner an und stellt die Verbindung her, so dass die geringeren Telefongebühren des Niedertariflandes anfallen.

Um das Telefonieren über Callback-Dienste zu vereinfachen, wurden Callback-Module entwickelt, die zwischen Telefonapparat und Amtsleitung eingeschlauft werden. Diese Callback-Module analysieren jeden ausgehenden Anruf und ermitteln die Region des Empfängers. Sofern ein Callback in diese Region finanziell günstiger als ein direkter Anruf ist, wählt das Callback-Modul automatisch den entsprechenden Callback-Dienst an, der sodann die gewünschte Verbindung herstellt. Der Anrufer merkt dabei nicht, dass er via Callback telefoniert.

Das Callback-Modul muss einen Speicher besitzen, in dem alle gewünschten Callback-Destinationen einprogrammiert sind. Änderungen müssen entweder lokal über ein Programmiergerät oder über die Telefonleitung eingegeben werden. Dies ist jedoch relativ zeitaufwendig und teuer. Das gleiche gilt auch für Umleitungs-Module, die aus mehreren alternativen Leitungsanbietern den billigsten auswählen.

Es stellt sich deshalb die Aufgabe, eine Vorrichtung bzw. ein Verfahren der eingangs genannten Art bereitzustellen, wo diese Nachteile mindestens teilweise vermieden oder reduziert werden. Insbesondere soll die Vorrichtung einfach an Änderungen der Tarifstruktur bzw. anderer Betriebsparameter anpassbar sein.

Diese Aufgabe wird von den unabhängigen Ansprüchen erfüllt.

Indem die Vorrichtung mit einem Funkempfänger ausgerüstet wird, mit welchem Steuersignale zur Umprogrammierung der Steuerung empfangen werden können, kann der Betrieb jederzeit problemlos den neuesten Parametern angepasst werden. Dabei kann der Funkrufempfänger seine Daten aus jedem geeigneten Funkrufnetz empfangen. Besonders bieten sich hier jedoch bestehende Dienste zur Übertragung digitaler Daten an, insbesondere Paging-Netzwerke oder Funktelefon-Netzwerke.

Aufgrund der empfangenen Signale wird vorzugsweise der Inhalt eines nicht-flüchtigen Gerätespeichers geändert. In diesem Speicher kann z.B. eine Tabelle der Regionen mit Callback-Diensten, oder mit alternativen Netzanbietern und/oder mindestens ein Teil des Steuerprogramms der Vorrichtung abgespeichert sein. Durch Änderung des Speicherinhalts lässt sich in diesem Falle des Verhalten der Vorrichtung praktisch beliebig allen neuen Bedingungen anpassen.

Weitere Anwendungen und Vorteile der Erfindung ergeben sich aus der nun folgenden Beschreibung anhand der Figuren. Dabei zeigen:
Figur 1 ein Blockdiagramm eines erfindungsgemässen Callback-Moduls,
Figur 2 ein Fernsprechnetz mit einem Callback-Service, und
Figur 3 ein Fernsprechnetz mit verschiedenen Netzanbietern.

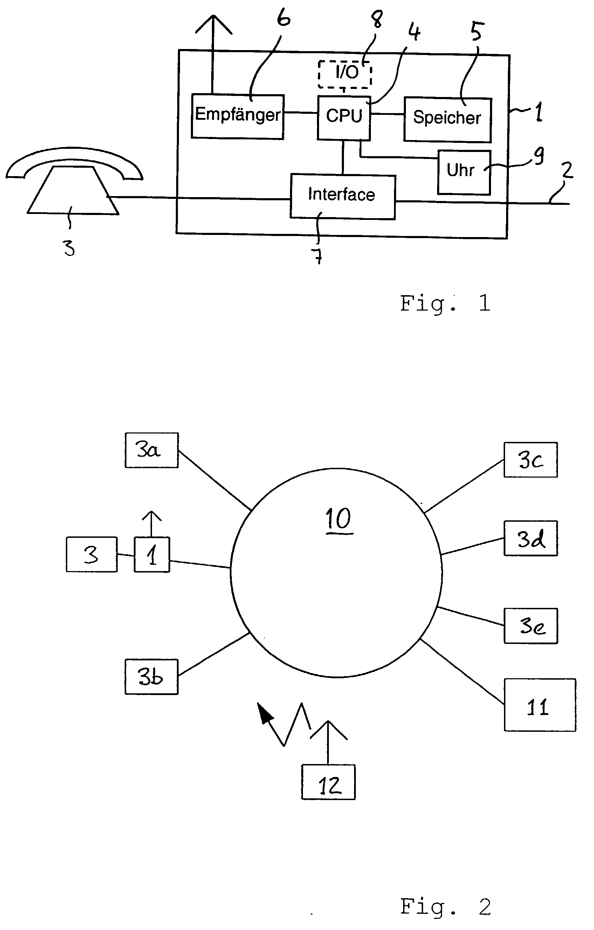

Figur 1 zeigt eine Ausführung der Erfindung in Form eines Steuer-Moduls 1. Dieses Modul wird in eine Leitung 2 eingeschlauft, die ein Telefon-Endgerät 3 mit einer Zentrale eines Fernsprechnetzes verbindet. Das Telefon-Endgerät 3 kann entweder ein Einzelgerät oder mehrere, in einer Hauszentrale zusammengeführte Telefongeräte sein. Das Modul 1 umfasst eine Zentraleinheit 4, einen Programm- und Datenspeicher 5, einen Empfänger 6 für digitale Funksignale und eine Schnittstelle 7 zur Überwachung der vom Endgerät 3 ausgehenden Anrufe. Zusätzlich kann es mit einer lokalen Eingabe und/oder Bedieneinheit 8 ausgerüstet sein. Ferner umfasst das Modul 1 eine (nicht gezeigte) Stromversorgung konventioneller Art.

Die Funktionsweise einer ersten Ausführung des Moduls 1 wird nun anhand der Fig. 2 erläutert. In dieser Ausführung arbeitet das Modul 1 als Vermittlungsgerät für Callback-Dienste. Die Figur zeigt vereinfacht ein Fernsprechnetz 10 mit verschiedenen Endgeräten 3 bzw. 3a - 3e. In diesem Beispiel ist eines der Endgeräte mit einem Modul 1 gemäss Figur 1 ausgerüstet. In der Praxis ist eine Vielzahl von Endgeräten mit Modulen 1 ausgerüstet.

Das Fernsprechnetz 10 umfasst die Netze verschiedener Netzanbieter, die unterschiedliche Tarife zur Benutzung vorsehen. In diesem Beispiel wird davon ausgegangen, dass die Endgeräte 3a - 3e und der im folgenden beschriebene Umleitungscomputer 11 von mindestens zwei verschiedenen Anbietern bedient werden und die Tarife davon abhängen, von welcher Station ein Anruf ausgeht.

Das Modul 1 überwacht die vom Endgerät 3 ausgehenden Anrufe. Hierzu wird in der Schnittstelle 7 die Telefonnummer und insbesondere die Vorwahl des gewünschten Gesprächspartners analysiert und es wird überprüft, ob die Telefonnummer einer Nummerngruppe angehört, für die sich ein Rückruf lohnt. Dabei wird die Vorwahl mit einer im Speicher 5 abgespeicherten Tabelle verglichen. In dieser Tabelle sind die Vorwahlen all jener Gebiete bzw. Länder abgespeichert, für die der Anruf über einen Callback-Dienst vorteilhaft ist, sowie die Nummern und allfällige weitere Parameter der Callback-Dienste für die entsprechenden Gebiete bzw. Länder.

Zeigt es sich, dass die Vorwahlnummer nicht in der Tabelle in Speicher 5 verzeichnet ist, so wird der Anruf ohne Änderung ans Netz 10 weitergeleitet. In diesem Fall wird der Empfänger 3a des Anrufes von einem Anbieter mit etwa gleichen oder höheren Telefongebühren bedient.

Entspricht die Vorwahlnummer gemäss der Tabelle jedoch einem Empfänger 3d jener Gebiete bzw. Länder, für die sich ein Callback lohnen würde, so wird der Anruf nicht direkt an eine Zentrale des Fernsprechnetzes weitergeleitet. Vielmehr wird mit der Schnittstelle 7 die Telefonnummer eines Vermittlungscomputers 11 des entsprechenden Callback-Dienstes gewählt. Sobald diese Verbindung hergestellt ist, teilt das Modul 1 dem Vermittlungscomputer 11 die Telefonnummer des Empfängers mit und unterbricht die Verbindung wieder. Dann ruft der Vermittlungscomputer 11 den Empfänger 3d und das Modul 1 an. Die so hergestellten Verbindungen unterliegen den tieferen Gesprächstaxen des Landes bzw. der Region oder des Anbieters, in welcher sich der Vermittlungscomputer 11 befindet. Sobald die beiden Verbindungen stehen, werden sie vom Vermittlungscomputer 11 miteinander verknüpft und die Schnittstelle 7 schaltet durch, so dass ein direkter Kommunikationsweg zwischen dem Endgerät 3 und dem Empfänger 3d entsteht.

Das Programm, dass bei der Umleitung des Anrufs von der Zentraleinheit 4 ausgeführt wird, ist ebenfalls im Speicher 5 abgelegt. Es bestimmt z.B. das Protokoll zur Kommunikation mit dem Vermittlungscomputer 11.

Da sich die Tarife der lokalen Telefonanbieter dauernd ändern, muss die Tabelle im Speicher 5 immer wieder angepasst werden. Änderungen werden auch dann nötig, wenn z.B. in gewissen Ländern neue Callback-Dienste entstehen, oder wenn sich z.B. die Telefonnummer des Vermittlungscomputers 11 ändert. Damit die entsprechenden Parameter des Moduls 1 leicht geändert werden können, ist der Speicher 5 als nicht-flüchtiger, änderbarer Speicher ausgestaltet. Er kann geändert werden, indem geeignete Radiosignale an den Empfänger 6 gesendet werden.

Im vorliegenden Fall ist der Empfänger 6 als Empfangsgerät eines konventionellen Paging-Netzwerks 12 ausgestaltet. Solche Paging-Netzwerke dienen zur Ausstrahlung kurzer digitaler Meldungen und können eine grosse Zahl von Empfängern bedienen. Jede Meldung wird mit einer Adresse kodiert, d.h. sie enthält eine Adresse, die den bzw. die Empfänger kennzeichnet. Dem bzw. den Modulen 1 ist mindestens eine solche Adressen zugeordnet.

Ändert im vorliegenden Fall z.B. die Telefonnummer des Vermittlungscomputers 11 des Callback-Dienstes, so wird über das Paging-Netzwerk 12 eine entsprechende Meldung ausgestrahlt. Diese Meldung wird von allen Modulen 1 im Einzugsgebiet des Paging-Netzwerks 12 empfangen und ausgewertet. In jedem Modul 1 wird die neue Telefonnummer sodann in der Tabelle in Speicher 5 abgelegt.

Auf die gleiche Art können auch kompliziertere Änderungen durchgeführt werden. Wird zum Beispiel in einem Land ein neuer Callback-Dienst eingeführt, dessen Vermittlungscomputer einem anderen Kommunikationsprotokoll folgt als bestehende Dienste, so kann über das Paging-Netzwerk 12 nicht nur die neue Nummer und deren Einzugsbereich übermittelt werden, sondern auch ein Programm zur Steuerung der Kommunikation zwischen dem Modul 1 und dem neuen Vermittlungscomputer. Dieses als Code für die Zentraleinheit 4 übermittelte Programm wird ebenfalls im Speicher 5 jedes Moduls 1 abgelegt und später zur Kommunikation mit dem neuen Dienst aufgerufen.

Zweckmässigerweise werden also alle Steuervorschriften (z.B. die Tabelle mit den Vorwahlen der Niedrigtarifländer, die Liste der entsprechenden Vermittlungscomputer, Programme zur Kommunikation mit den Vermittlungscomputern, usw.) im Speicher 5 abgelegt, so dass sie über Funk geändert werden können.

Im obigen Beispiel ist der Empfänger 6 in einem Paging-Netzwerk eingebunden. Alternativ hierzu kann er jedoch seine Signale über ein Mobiltelefonnetz, ein Datenfunknetz oder ein normales Funknetz empfangen. Bevorzugt sind jedoch jene Dienste, die gleichzeitig noch zu anderen Zwecken verwendet werden können und die ihren Empfängern spezifische Adressen zuordnen, wie z.B. Paging-Netze und Mobiltelefon-Netze.

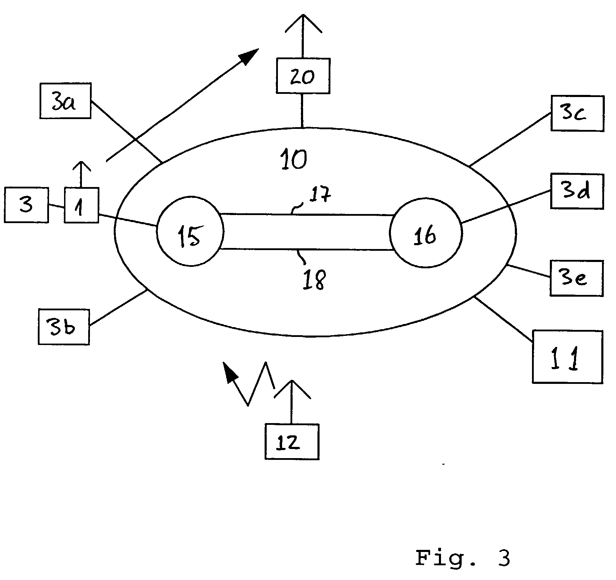

Eine zum Callback-Verfahren zusätzliche oder alternative Möglichkeit zur Einsparung von Telefongebühren ergibt sich, wenn zwischen zwei Zentralen des Fernsprechnetzes verschiedene Netzanbieter sich konkurrenzierende Übermittlungswege anbieten. Dies ist in Figur 3 illustriert. Im hier gezeigten Fernsprechnetz 10 sind zwei Netzzentralen 15, 16 eingezeichnet, von denen die eine mit dem Endgerät 3 und die andere mit dem Endgerät 3d verbunden ist. Zwischen diesen Zentralen 15, 16 existieren verschiedene Übermittlungswege 17, 18, die hier in Form zweier Leitungen dargestellt werden. Jeder Übermittlungsweg wird von einem (oder mehreren) Netzanbietern betrieben. Die Auswahl des Übermittlungsweges geschieht über Auswahlsignale, welche das Modul 1 an die Zentrale 15 sendet.

Wird vom Endgerät 3 das Endgerät 3d angewählt, so stellt das Modul 1 aufgrund einer im Speicher 5 abgelegten Tabelle fest, dass zur Kontaktaufnahme mit Endgerät 3d zwei (oder mehr) Übermittlungswege 17, 18 zur Verfügung stehen und welcher davon im vorliegenden Fall der billigere ist. Ferner ist im Speicher 5 festgelegt, wie der jeweilige Übermittlungsweg angewählt werden kann - im vorliegenden Fall durch Übermittlung des erwähnten Auswahlsignals an die Zentrale 15. Aufgrund dieser Information kann das Modul 1 nun den preiswertesten Übermittlungsweg zwischen den Endgeräten 3 und 3d herstellen.

In Figur 3 ist noch eine weitere Möglichkeit dargestellt, wie das Modul 1 eine kostengünstige Übermittlung herstellen kann. Hierzu wird es zusätzlich zum Empfänger 6 mit einem Radiosender ausgerüstet. Dieser Sender kann mit einem Funkrufnetz 20 Kontakt aufnehmen und Gespräche nicht nur über die Zentrale 15, sondern auch über dieses Funkrufnetz 20 in das übrige Fernsprechnetz 10 einspeisen. Auf diese Weise eröffnet sich ein weiterer Übertragungsweg zwischen dem Endgerät 3 und den übrigen Endgeräten 3a - 3e, der, je nach Tarifstruktur im Fernsprechnetz 10, der kostengünstigste sein kann.

Die Informationen (Kosten und Vorgehen zum Verbindungsaufbau) über den Übermittlungsweg via Funkrufnetz 20 sind wiederum im Speicher 5 abgelegt.

Generell kann also das Modul 1 für jeden ausgehenden Anruf entscheiden, auf welchem Weg er übermittelt werden soll. Hierzu können einzelne oder mehrere Übermittlungsdienste (wie z.B. der Callback-Vermittlungscomputer 11, Leitungen 17, 18 verschiedener Anbieter, oder das Funkrufnetz 20) gezielt angewählt und eingesetzt werden. Wie die Übermittlungswege anzuwählen sind und welche Dienste für welchen Zweck kostengünstig eingesetzt werden können, ergibt sich aus den im Speicher 5 abgelegten Informationen. Ändern sich diese Informationen, so können sie auf einfache Weise per Funk via Netzwerk 12 nachgeführt werden.

In einer weiteren bevorzugten Ausführung kann das Modul 1 im Speicher 5 auch eine Tabelle mit statistischen Daten der getätigten Anrufe unterhalten, so dass bei zukünftigen Anrufen eine Abschätzung der voraussichtlichen Gesprächsdauer gemacht werden kann. Hierzu werden im Speicher 5 die Gesprächsdauer der Anrufe in ein bestimmtes Gebiet oder an einen bestimmten Gesprächspartner abgelegt oder zumindest entsprechende Mittelwerte über die letzten paar Anrufe nachgeführt. Gegebenenfalls können diese Daten zusätzlich noch nach der Anrufszeit unterteilt werden, wozu das Modul 1 mit einer Uhr 9 ausgestattet ist. Tätigt nun der Anrufer einen Anruf in ein bestimmtes Gebiet bzw. an einen bestimmten Empfänger, für das bzw. den statistische Werte bereits abgespeichert sind, so kann das Modul aufgrund der Daten die mittlere zu erwartende Gesprächsdauer festlegen. Sodann ermittelt das Modul denjenigen Anbieter, der für die erwartete Gesprächsdauer den günstigsten Tarif hat, und nimmt die entsprechende Umleitung vor.

Somit kann also das Modul 1 im Speicher 5 laufend Daten zu den Anrufgewohnheiten des Benutzers ablegen, bei einem neuen Anruf aufgrund dieser Daten eine zu erwartende Gesprächsdauer ermitteln und sodann den für diese Gesprächsdauer günstigsten Übermittlungsweg bestimmen. Die abgelegten Daten sind dabei statistischer Natur und können z.B. eine mittlere Gesprächsdauer, in einer einfachsten Ausführung aber auch nur die Dauer des letzten Anrufs umfassen.

Das Modul 1 kann als Zusatzgerät zu jedem bestehenden Telefon in dessen Amtsleitung eingeschlauft werden. Es kann jedoch auch direkt im Telefon 3 eingebaut sein. Es ist auch möglich, das Zusatzgerät zur Bedienung mehrerer Endgeräte gleichzeitig auszubilden und z.B. in einer Hauszentrale zu integrieren.

## Patentansprüche

1. Vorrichtung zur Anordnung zwischen einem Telefon-Endgerät (3) und einem Fernsprechnetz (10), wobei mit der Vorrichtung (1) der Übermittlungsweg im Fernsprechnetz (10) mindestens eines Teils der vom Telefon-Endgerät (3) ausgehenden Anrufe aufgrund von in der Vorrichtung abgespeicherten Steuervorschriften wählbar ist, dadurch gekennzeichnet, dass die Vorrichtung (1) einen Funkempfänger (6) zum Empfang von Steuersignalen aufweist, wobei die abgespeicherten Steuervorschriften mittels der empfangenen Steuersignale änderbar sind.

2. Vorrichtung nach Anspruch 1, dadurch gekennzeichnet, dass der Funkempfänger (6) zum Empfang von adresskodierten Signalen eines Funknetzes (12) ausgestaltet ist, wobei dem Funkempfänger (6) mindestens eine Adresse zugeordnet ist.

3. Vorrichtung nach einem der vorangehenden Ansprüche, dadurch gekennzeichnet, dass sie einen nichtflüchtigen, änderbaren Speicher (5) für die Steuervorschriften aufweist, wobei der Inhalt des Speichers (5) mindestens teilweise mittels der empfangenen Steuersignale änderbar ist.

4. Vorrichtung nach einem der vorangehenden Ansprüche, gekennzeichnet durch eine durch ein Steuerprogramm gesteuerte Steuereinheit (4), wobei das Steuerprogramm mittels der empfangenen Steuersignale änderbar ist.

5. Vorrichtung nach einem der vorangehenden Ansprüche, dadurch gekennzeichnet, dass sie zur Anordnung in einer Übertragungsleitung (2) zwischen dem Telefon-Endgerät (3) und einer Zentrale des Fernsprechnetzes (10) ausgestaltet ist.

6. Vorrichtung nach Anspruch 5, dadurch gekennzeichnet, dass sie einen Funksender aufweist und dass ausgehende Anrufe aufgrund der Steuervorschriften über die Übertragungsleitung oder über den Funksender weiterleitbar sind.

7. Vorrichtung nach einem der vorangehenden Ansprüche, dadurch gekennzeichnet, dass sie Mittel (4,5,7) zur Analyse einer gewählten Telefonnummer eines ausgehenden Anrufes und zum Ersatz der gewählten Telefonnummer mit einer aufgrund der Steuervorschriften gewählten Umleitungsnummer aufweist.

8. Vorrichtung nach einem der vorangehenden Ansprüche, gekennzeichnet durch Mittel (4, 5, 9) zur Erfassung der Dauer getätigter Gespräche und zur Ermittlung einer zu erwartenden Gesprächsdauer eines neuen Anrufs, wobei aufgrund der erwarteten Gesprächsdauer der Übermittlungsweg wählbar ist.

9. Fernsprechnetz mit einer Vorrichtung (1) nach einem der vorangehenden Ansprüche, dadurch gekennzeichnet, dass die Vorrichtung in der Verbindungsleitung (2) zwischen einem Telefon-Endgerät (3) und einer Zentrale des Fernsprechnetzes (10) angeordnet ist.

10. Fernsprechnetz nach Anspruch 9, dadurch gekennzeichnet, dass es mehrere alternative Übermittlungswege zwischen dem Telefon-Endgerät (3) und Empfangs-Endgerät (3a - 3e) bietet, wobei der jeweilige Übermittlungsweg aufgrund der Steuervorschriften durch die Vorrichtung (1) wählbar ist.

11. Verfahren zum Betrieb einer Vorrichtung (1), die zwischen einem Telefon-Endgerät (3) und einem Fernsprechnetz (10) angeordnet ist und den Übermittlungsweg im Fernsprechnetz (10) mindestens eines Teils der vom Telefon-Endgerät (3) ausgehenden Anrufe aufgrund von in der Vorrichtung (1) abgespeicherten Steuervorschriften steuert, dadurch gekennzeichnet, dass zur Änderung der Steuervorschriften Funksignale ausgesendet werden, die von einem Funkempfänger (6) der Vorrichtung (1) empfangen werden und eine Änderung der Steuervorschriften bewirken.

12. Verfahren nach Anspruch 11, dadurch gekennzeichnet, dass die Funksignale mittels eines Paging-Netzes oder eines Mobiltelefon-Netzes übertragen werden, wobei der Funkempfänger an ihn gerichtete Signale des Paging- bzw. Mobiltelefon-Netzes empfängt.

13. Verfahren nach einem der Ansprüche 11 oder 12, dadurch gekennzeichnet, dass mit der Vorrichtung
die vom Telefon-Endgerät ausgehenden Anrufe darauf überprüft werden, ob sie an einem Empfänger gerichtet sind, der einer umzuleitenden Empfängergruppe angehört und
falls ein ausgehender Anruf an die umzuleitende Empfängergruppe gerichtet ist, der Übermittlungsweg aufgrund der Steuervorschriften gewählt wird.

14. Verfahren nach Anspruch 12, dadurch gekennzeichnet dass, falls ein ausgehender Anruf an die umzuleitende Empfängergruppe gerichtet ist, eine Identifikation des Empfängers an eine Rückrufeinheit (11) weitergeleitet wird, welche sodann über das Fernsprechnetz (10) eine Verbindung mit dem Empfänger und mittels Rückruf mit dem Telefon-Endgerät (3) herstellt.

15. Verfahren nach einem der Ansprüche 13 oder 14, dadurch gekennzeichnet dass, falls ein ausgehender Anruf an die umzuleitende Empfängergruppe gerichtet ist, ein Auswahl-Signal an eine Zentrale (15) des Fernsprechnetzes (10) gesendet wird, wobei die Zentrale (15) aufgrund des Auswahlsignals, einen von mehreren alternativen Übertragungswegen zum Empfänger auswählt.

16. Verfahren nach einem der Ansprüche 13-15, dadurch gekennzeichnet, dass die umzuleitende Empfängergruppe durch die Steuervorschriften festgelegt ist und mit den Funksignalen änderbar ist.

17. Verfahren nach einem der Ansprüche 12-16, dadurch gekennzeichnet, dass aufgrund von Daten über vergangene Anrufe eine zu erwartende Gesprächsdauer eines neuen Anrufs ermittelt und der Übermittlungsweg abhängig von der zu erwartenden Gesprächsdauer gewählt wird.
